**Europäisches Patentamt**

**European Patent Office**

**Office européen des brevets**

(19)

(11)  **EP 0 691 756 A1**

(12)  **EUROPÄISCHE PATENTANMELDUNG**

(43) Veröffentlichungstag:
    **10.01.1996 Patentblatt 1996/02**

(51) Int. Cl.⁶: **H04B 3/23**

(21) Anmeldenummer: **95110440.5**

(22) Anmeldetag: **05.07.1995**

(84) Benannte Vertragsstaaten:
    **AT BE CH DE DK ES FR GB GR IT LI NL PT SE**

(30) Priorität: **07.07.1994 CH 2170/94**
    **07.07.1994 CH 2171/94**
    **19.06.1995 CH 1793/95**
    **23.06.1995 CH 1852/95**

(71) Anmelder: **SIEMENS-ALBIS
    AKTIENGESELLSCHAFT
    CH-8047 Zürich (CH)**

(72) Erfinder:
    • **Gysel, Peter Dr.**
      **8048 Zürich (CH)**
    • **Wenger, Bruno**
      **8804 Au / ZH (CH)**
    • **Kälin, August Dr.**
      **8906 Bonstetten (CH)**
    • **Müller, Daniel**
      **8006 Zürich (CH)**

(54)  **Echokompensator mit analogen Grobkompensator und digitalem Feinkompensator**

(57)     Die Erfindung betrifft eine Schaltungsanordnung zum Kompensieren von Echosignalen, bestehend aus einem ein Sendesignal (SS) führenden Sendepfad, einem ein Empfangssignal (ES) führenden Empfangspfad, einem adaptiven Filter (AF), einem analogen ersten Addierer (ADD1), einem ersten Digital/Analog-Wandler (DAC), einer Übertragungseinheit (GS) und einer an dieser angeschlossenen Zweidrahtleitung (L), über die zumindest das Sendesignal (SS), das Empfangssignal (ES) und Echosignalanteile übertragen werden. Der Sende- und der Empfangspfad sind ferner mit der Übertragungseinheit (GS) verbunden, und das Sendesignal (SS) wird zur Schätzung des Echosignals dem adaptiven Filter (AF) zugeführt. Darüber hinaus ist im Empfangspfad ein mit dem ersten Addierer (ADD1) verbundener Analog/Digital-Wandler (ADC) und ein zweiter, dem Analog/Digital-Wandler (ADC) nachgeschalteter Addierer (ADD2) vorgesehen. Das geschätzte Echosignal (Y) wird erfindungsgemäss in einen ersten und einen zweiten Teil (Y_MSB; Y_LSB) aufgeteilt, wobei der erste Teil (Y_MSB) des geschätzten Echosignals (Y) dem ersten Addierer (ADD1) und der zweite Teil (Y_LSB) des geschätzten Echosignals (Y) dem zweiten Addierer (ADD2) zur Erzeugung des Empfangssignals (ES) zugeführt wird.

In einer weiteren Ausführungsform der Erfindung ist zwischen dem Analog/Digital-Wandler (ADC) und dem zweiten Addierer (ADD2) ein dritter Addierer (ADD3) vorgesehen, über den das Ausgangssignal eines Kompensationsfilters (TLU) zum Signal im Empfangspfad addiert wird. Die erfindungsgemässe Schaltungsanordnung hat dabei insbesondere den Vorteil, dass der Schaltungsaufwand für den Digital/Analog-Wandler (DAC) gegenüber bekannten Lösungen wesentlich reduziert werden kann, da auch die Anforderungen an die Linearität des Analog/Digital-Wandlers (ADC) vermindert sind.

Fig. 3

**Beschreibung**

Die vorliegende Erfindung betrifft eine Schaltungsanordnung zum Kompensieren von Echosignalen nach dem Oberbegriff des Patentanspruchs 1.

Kupferleitungen sind nach wie vor das Hauptübertragungsmedium für die Datenübertragung zwischen einem Teilnehmeranschluss und einer Fernmeldezentrale eines öffentlichen Fernmeldenetzes. Ein Teilnehmeranschluss muss für den Teilnehmer auf der einen Seite kostengünstig sein, auf der anderen Seite ist es wünschenswert, eine möglichst hohe Datenübertragungsrate realisieren zu können. Durch das Ersetzen der Kupferleitungen durch Glasfaserkabel könnte zwar die zweitgenannte Bedingung weitgehend erfüllt werden, jedoch würde dies mit erheblichen Kosten verbunden sein, da das bestehende Feinverteilungsnetz vollständig ersetzt werden müsste. Aus diesem Grund wurde bereits verschiedentlich die Entwicklung einer schnellen digitalen Vollduplex-Datenübertragungsleitung über Kupfertelefonleitungen vorgeschlagen. Eine Übersicht über diese als HDSL (High Bit Rate Digital Subscriber Line) bezeichnete Datenübertragung wurde beispielsweise im Aufsatz von J. W. Lechleider mit dem Titel "High Bit Rate Digital Subscriber Lines: A Review of HDSL Progress" veröffentlicht (IEEE Journal on Sel. Areas in Com., 9(6), Seiten 769 bis 784, August 1991).

Bei der HDSL Datenübertragung werden auf einem Kupferkabel in beiden Richtungen Daten übertragen. Eine sogenannte Übertragungseinheit - auch als Gabelschaltung bezeichnet - führt dabei die Richtungstrennung der zu sendenden und der zu empfangenden Signale durch. Da diese Richtungstrennung insbesondere für sich in ihrer Charakteristik ändernde Leitungen nicht perfekt realisiert werden kann, ist das vom fernen Teilnehmer empfangene Signal mit einem Echosignal (auch als Fehlersignal bezeichnet) des nahen Teilnehmers überlagert. Das Echosignal kann dabei um 30 bis 40 dB stärker sein als das eigentliche Nutzsignal. Um beim Empfänger die geforderte Bitfehlerwahrscheinlichkeit von ca. $10^{-7}$ erreichen zu können, wird eine adaptive Kompensation des Echos vorgenommen, indem mit Hilfe eines adaptiven Filters das Echosignal geschätzt und vom empfangenen Signal subtrahiert wird. Für das adaptive Filter werden dabei beispielsweise FIR-(Finite Impulse Response)-Filter verwendet, die 90 bis 100 Koeffizienten (Taps) aufweisen können und demzufolge einen entsprechend grossen Schaltungsteil benötigen. Zur Reduktion des Schaltungsaufwandes, wurde in der europäischen Patentanmeldung EP-0 384 490 ein Echokompensator mit einem adaptiven Filter offenbart, das aus einem FIR-(Finite Impulse Response)- und einen IIR-(Infinite Impulse Response)-Filter in Kaskade geschaltet besteht. Dadurch wird zwar erreicht, dass der Schaltungsaufwand für das adaptive Filter reduziert wird, doch können mit diesem adaptiven Filter keine Nichtlinearitäten im Sendepfad kompensiert werden.

Ferner ist aus der europäischen Patentanmeldung EP-0 464 500 ein Echokompensator bekannt, bei dem das geschätzte Echosignal vollständig im analogen Teil kompensiert wird. Dadurch wird zwar sowohl der Schaltungsaufwand für den Analog/Digital-Wandler als auch für den folgenden Addierer im Empfangspfad reduziert, doch bleiben die hohen Anforderungen an die Linearität des für die Umsetzung des geschätzten Echosignals verwendeten Digital/Analog-Wandlers bestehen. Somit wird die Reduktion des Schaltungsaufwandes beim Analog/Digital-Wandler durch die Verwendung des nunmehr notwendigen Digital/Analog-Wandlers im wesentlichen kompensiert.

Der vorliegenden Erfindung liegt daher die Aufgabe zugrunde, eine Schaltungsanordnung zum Kompensieren von Fehlersignalen anzugeben, bei welcher der Schaltungsaufwand weiter vermindert und die Schätzung des Echosignals verbessert wird.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

Indem das geschätzte Echosignal in einen ersten Teil zur analogen Vorkompensation und in einen zweiten Teil zur digitalen Kompensation aufgeteilt wird, wird die Auflösung des im Empfangspfad benötigten Analog/Digital-Wandlers reduziert. Ferner erlaubt die vorgeschlagene Aufteilung die Verwendung eines auf dem Speicherkompensationsprinzip basierenden nichtlinearen Kompensationsfilters. Dies führt zu wesentlich bescheideneren Anforderungen bezüglich Linearität und Auflösung des Digital/Analog-Wandlers.

Eine weitere wesentliche Reduktion des Schaltungsaufwandes lässt sich dadurch erreichen, dass für den eigentlichen Echokompensator eine optimierte Kombination von FIR und IIR Filter verwendet wird. Instabilitäten des IIR Filters lassen sich vermeiden, indem nur linear einstellbare Koeffizienten adaptiert werden und die Pole mit Hilfe von "a priori"-Wissen optimal festgelegt werden.

Bei der Realisation der Schaltungsanordnung durch Integration auf einem Chip (als sogenannter integrierter Schaltkreis) ist eine Reduktion des Schaltungsaufwandes nicht nur aus Platzgründen von Bedeutung, sondern besonders auch wegen des damit verbundenen verminderten Energieverbrauchs, da dieser bei gleicher Technologie mit zunehmender Grösse der Schaltungsanordnung ebenfalls zunimmt. Die besondere Bedeutung des letztgenannten Vorteils ergibt sich daraus, dass die beim Teilnehmer zur Verfügung stehende Energie durch vorhandene Energieversorgungsvorrichtungen begrenzt ist. Zusätzliche Energiequellen sind nicht vorgesehen.

Die Erfindung wird nachfolgend anhand von Zeichnungen beispielsweise näher erläutert. Dabei zeigt

Fig. 1 ein Übertragungsnetzwerk mit einem bekannten Echokompensator mit digitaler Kompensation des Echosignals,

Fig. 2    das Übertragungsnetzwerk mit einem bekannten Echokompensator mit analoger Kompensation des Echosignals,

Fig. 3    das Übertragungsnetzwerk mit einem erfindungsgemässen Echokompensator mit einem analogen Vorkompensator und einem digitalen Kompensator,

Fig. 4 bis Fig. 8    weitere Ausführungsvarianten des in Fig. 3 dargestellten Echokompensators,

Fig. 9    Amplitudenverhältnisse im Empfangspfad des in Fig. 8 dargestellten Übertragungsnetzwerkes und

Fig. 10    ein im Echokompensator verwendetes adaptives Filter bestehend aus einem IIR- und einem FIR-Filterteil.

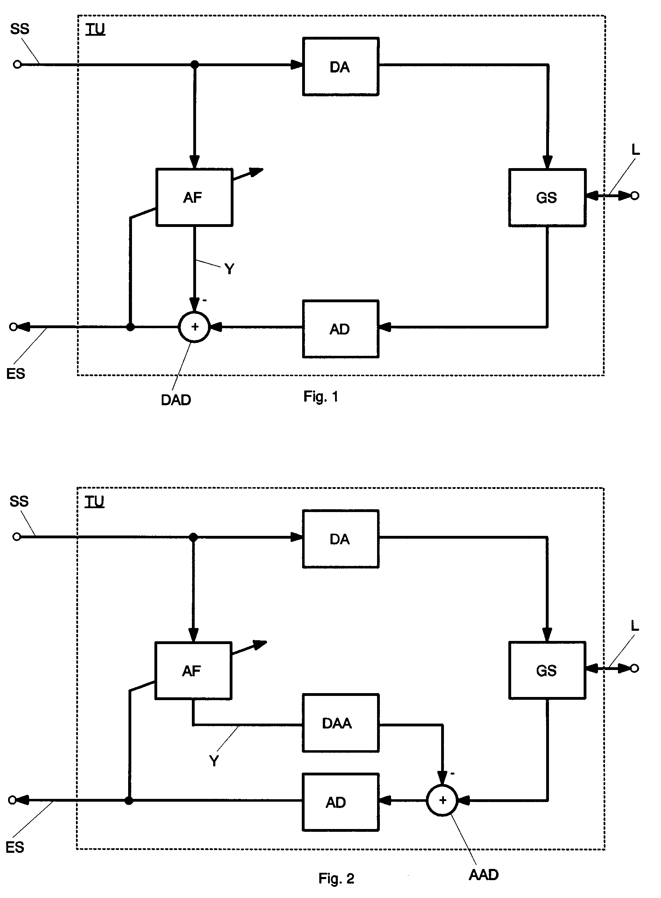

Fig. 1 zeigt ein bekanntes Übertragungsnetzwerk TU zur Trennung der über eine Zweidrahtleitung L in beide Richtungen übertragenen analogen Informationen in ein digitales Sendesignal SS und ein digitales Empfangssignal ES. Das Übertragungsnetzwerk TU beinhaltet im wesentlichen einen das Sendesignal SS führenden Sendepfad bestehend aus einem Digital/Analog-Wandler DA und einem das Empfangssignal ES führenden Empfangspfad bestehend aus einem Analog/Digital-Wandler AD und einem Addierer DAD, wobei der Digital/Analog-Wandler DA zum Übertragen des analogen Sendesignals SS und der Analog/Digital-Wandler AD zum Empfangen des analogen Empfangssignals ES an eine Übertragungseinheit GS gekoppelt sind. Bei der Realisation der Übertragungseinheit GS wird aufgrund von Nichtidealitäten zumindest ein Teil des Sendesignals SS in den Empfangspfad direkt übertragen. Zudem gelangt ein an entfernteren Stellen der Zweidrahtleitung L erzeugtes unzulässiges Echo des Sendesignals SS in den Empfangspfad. Somit wird das eigentliche Empfangssignal mit einem Fehlersignal bestehend aus den beiden obengenannten Komponenten überlagert. Im folgenden soll dieses Fehlersignal generell als Echosignal bezeichnet werden. Zur Erlangung der in der Einleitung erwähnten gewünschten Bitfehlerwahrscheinlichkeit ist aus diesem Grund ein adaptives Filter AF vorgesehen, mit Hilfe dessen ein Echosignal Y geschätzt und anschliessend zur Wiederherstellung des tatsächlichen Empfangssignals ES verwendet wird. Aus diesem Grund ist im Empfangspfad dem Analog/Digital-Wandler AD der Addierer DAD nachgeschaltet, in dem das geschätzte Echosignal Y vom empfangenen Signal subtrahiert wird. Somit steht am Ausgang des Übertragungsnetzwerks TU annähernd das tatsächliche Empfangssignal zur Verfügung.

Da sich das Echosignal aufgrund von sich ändernden Leitungscharakteristiken ebenfalls ändert, müssen die Koeffizienten des Filters AF den neuen Bedingungen laufend angepasst werden. Dies kann beispielsweise mit dem bekannten LMS-(Least Mean Square)-Algorithmus oder LMS-Varianten vorgenommen werden, mit deren Hilfe die Koeffizienten des Filters AF adaptiert werden (B. Widrow und S. D. Steams, "Adaptive Signal Processing", Prentice-Hall, Inc., Englewood Cliffs, New Jersey, 1985; C. Cowan und P. Grant, "Adaptive Filters", Prentice- Hall, 1985).

Fig. 2 zeigt eine bekannte Weiterentwicklung des in Fig. 1 dargestellten Übertragungsnetzwerkes TU entsprechend der in der europäischen Patentanmeldung EP-0 464 500 offenbarten Lehre, wobei als Unterschied zu der in Fig. 1 dargestellten Lösung die Echokompensation nunmehr vollständig im analogen Bereich des Empfangspfades vorgenommen wird. Dazu ist ein zweiter Digital/Analog-Wandler DAA notwendig, der das vom adaptiven Filter AF geschätzte digitale Echosignal in ein analoges Echosignal konvertiert. Mit einem nunmehr analogen Addierer AAD wird das geschätzte Echosignal Y vom empfangenen Signal vor dem Analog/Digital-Wandler AD subtrahiert. Somit werden die Anforderungen an die Auflösung des Analog/Digital-Wandlers AD von typischerweise 14 Bit auf 9 Bit vermindert. Um die Echokompensation trotzdem mit der geforderten Genauigkeit von 14 Bit durchführen zu können, muss nun der Digital/Analog-Wandler DAA mit 14 Bit Auflösung arbeiten. Das Problem des Schaltungsaufwandes wird somit im wesentlichen vom Analog/Digital-Wandler AD auf den Digital/Analog-Wandler DAA übertragen.

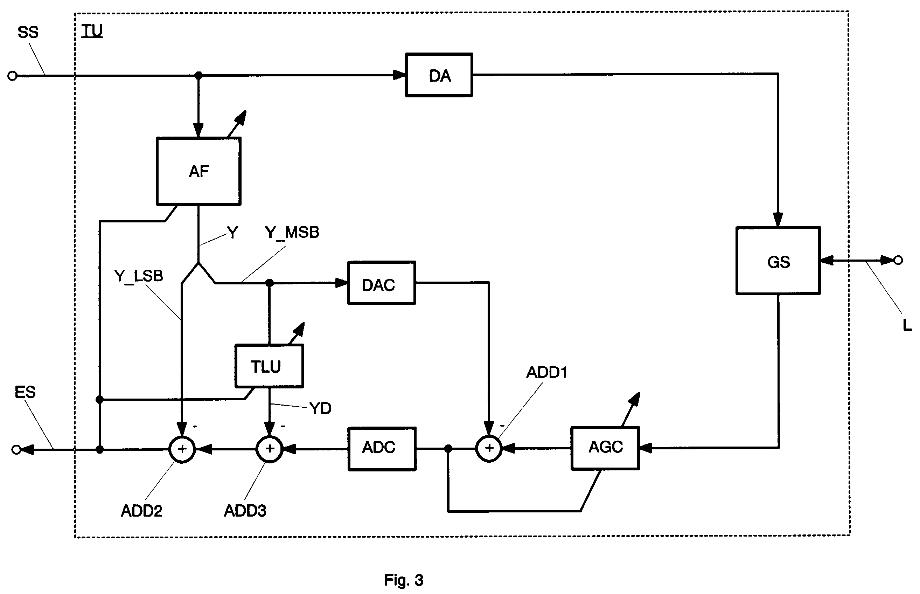

Fig. 3 zeigt einen prinzipiellen Aufbau eines erfindungsgemässen Übertragungsnetzwerkes TU, das einen ein Sendesignal SS führenden Sendepfad, einen ein Empfangssignal ES führenden Empfangspfad und eine Übertragungseinheit GS aufweist, wobei der Empfangspfad im wesentlichen aus einer einstellbaren Verstärkungseinheit AGC, einem analogen ersten Addierer ADD1, einem Analog/Digital-Wandler ADC und einem zweiten und dritten Addierer ADD2 bzw. ADD3 besteht. Zwischen dem Sende- und dem Empfangspfad ist ein adaptives Filter AF, ein erster Digital/Analog-Wandler DAC und ein Kompensationsfilter TLU vorgesehen, die zusammen mit den im Empfangspfad vorhandenen Addierer ADD1, ADD2 und ADD3 einen Echokompensator bilden. Schliesslich besteht der Sendepfad im wesentlichen aus einem zweiten Digital/Analog-Wandler DA.

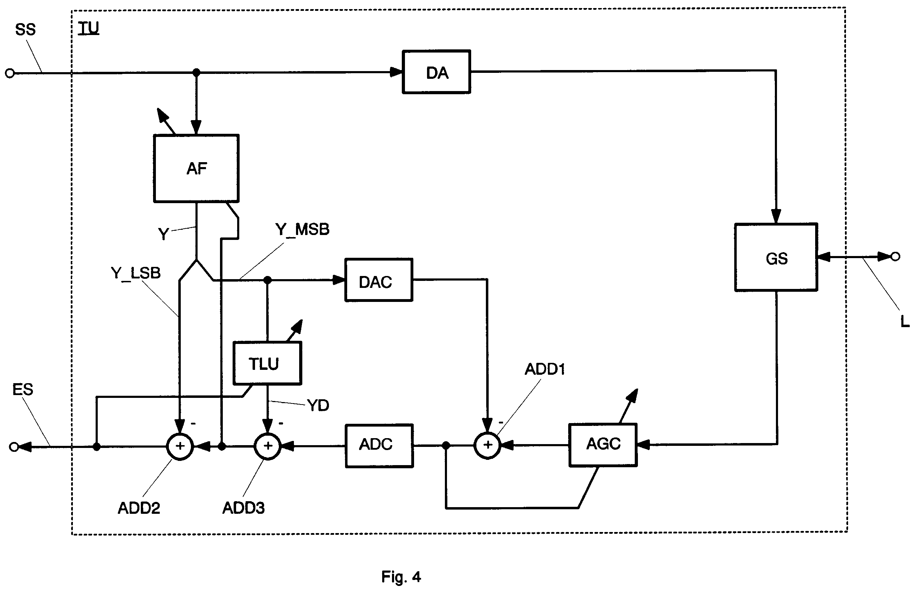

Zur Wahrung der Übersichtlichkeit sind in Fig. 3 - wie auch in den folgenden Figuren 4 bis 7 - allfällig vorhandene Verstärkungsfaktoren, Tiefpass- und Hochpassfilter, etc. nicht dargestellt. Solche zusätzlichen Signalverarbeitungseinheiten werden in den folgenden Erläuterungen nur dann erwähnt, wenn es sich für das Verständnis der Funktionsweise der Schaltungsanordnung als unumgänglich erweist.

Im vorliegenden Ausführungsbeispiel wird davon ausgegangen, dass das Sendesignal SS als vierwertiges Signal zur Verfügung steht, das durch die Transformation eines binären Datenstromes beispielsweise mit Hilfe eines in Fig. 3 nicht dargestellten 2B1Q-Codierers erzeugt wird. Dabei wandelt der 2B1Q-Codierer jeweils zwei Bit des binären Datenstromes in ein vierwertiges Symbol um, wobei folgendes Codierschema angewendet wird: die binäre Folge "00" wird zu -3, "01" zu -1, "11" zu +1 und "10" zu +3. Somit wird eine Übertragungsrate von 1168 kBit/s in eine Symbolrate von 584 kS/s konvertiert. Dieses vierwertige Sendesignal SS wird einerseits dem adaptiven Filter AF und anderseits dem zweiten Digital/Analog-Wandler DA zugeführt, in dem die möglichen Symbolwerte in Spannungswerte - beispielsweise -3, -1, +1 und +3 Volt - umgewandelt werden. Dieses nunmehr analoge Signal wird zunächst über ein in Fig. 3 nicht dargestelltes Sendefilter, das noch weiter zu erläutern ist, und anschliessend der Übertragungseinheit GS zugeführt, die das Signal - im Idealfall ohne zu verändern - in die Zweidrahtleitung L einkoppelt. Auf der Empfangsseite wird in analoger Weise das über die Zweidrahtleitung L empfangene Signal ausgekoppelt und dem Empfangspfad zugewiesen. Die Übertragungseinheit GS hat demzufolge die Funktion einer üblicherweise bei Endgeräten verwendeten Gabelschaltung, welche die über die Zweidrahtleitung L übertragenen Signale entsprechend ihrer Übertragungsrichtung trennt bzw. zusammenführt. Ideale Übertragungseinheiten GS der genannten Art sind jedoch nicht realisierbar, da die Dämpfung zwischen Sende- und Empfangspfad immer endlich ist. Somit ist ein sogenanntes Übersprechen zwischen Sende- und Empfangspfad, das auch als NEXT (Near End Cross Talk) bezeichnet wird, üblicherweise vorhanden, wobei dessen Stärke von der Qualität der Übertragungseinheit GS abhängig ist. Ferner entstehen insbesondere auch Echosignale durch Reflexionen an Stossstellen oder am Leitungsende der Zweidrahtleitung L, die ebenso in den Empfangspfad gelangen und dem eigentlichen Empfangssignal überlagert sind.

Weitere dem eigentlichen Empfangssignal überlagerte Störsignale können durch im Übertragungsnetzwerk TU verwendete Signalverarbeitungseinheiten, die Nichtidealitäten wie beispielsweise Quantisierungsfehler oder Nichtlinearitäten aufweisen, verursacht werden. Ohne besondere Hinweise fallen diese weiteren Störsignale im folgenden ebenfalls unter den Begriff "Echosignal".

Wie erwähnt, wird zur Elimination von Echosignalen im über die Übertragungseinheit GS empfangenen Signal ein Echokompensator eingesetzt, der aufgrund des Sendesignals SS eine Schätzung dieser Echosignale vornimmt, welche von den über die Übertragungseinheit GS empfangenen Signalen subtrahiert werden. Ferner werden bei der erfindungsgemässen Schaltungsanordnung auch die durch die Nichtidealitäten der verwendeten Signalverarbeitungseinheiten verursachten weiteren Störsignale weitgehend kompensiert.

Das adaptive Filter AF wird mit dem Sendesignal SS zur Schätzung des Echosignals Y beaufschlagt, von dem ein aus den höchstwertigen Bit bestehender erster Teil Y_MSB dem ersten Digital/Analog-Wandler DAC und dem Kompensationsfilter TLU zugeführt wird. Das einem Teil des Echosignals entsprechende analoge Ausgangssignal des Digital/Analog-Wandlers DAC wird über den ersten Addierer ADD1 im Empfangspfad subtrahiert. Dadurch erfolgt eine eigentliche analoge Vorkompensation des amplitudenmässig grössten Echoanteils vor dem Analog/Digital-Wandler ADC.

Nach dem Analog/Digital-Wandler ADC wird durch den dritten Addierer ADD3 ein im Kompensationsfilter TLU erzeugtes Kompensationssignal YD vom Empfangspfad subtrahiert. Schliesslich folgt im Empfangspfad in Übertragungsrichtung gesehen der zweite Addierer ADD2, in dem ein zweiter Teil Y_LSB des geschätzten Echosignals Y zur Erzeugung des Empfangssignals ES vom Signal im Empfangspfad subtrahiert wird. Der zweite Teil Y_LSB entspricht dabei den restlichen niederwertigen Bit des geschätzten Echosignals Y.

Der erste und der zweite Teil Y_MSB und Y_LSB bilden zusammen die gesamte Breite des geschätzten Echosignals Y. Ausgehend von einem 16 Bit breiten Echosignal Y, womit sich eine Rechengenauigkeit von 14 Bit erreichen lässt, hat sich eine Breite von 6 Bit für den ersten Teil Y_MSB und demzufolge eine Breite von 10 Bit für den zweiten Teil Y_LSB des Echosignals Y als besonders vorteilhaft erwiesen. Es wird jedoch ausdrücklich darauf hingewiesen, dass in der erfindungsgemässen Schaltungsanordnung eine beliebige Aufteilung der Bit des Echosignals Y vorgenommen werden kann. Bedingung ist lediglich, dass der erste Teil Y_MSB ein oder mehrere, zusammenhängende höherwertige Bit (Most Significant Bit) bzw. der zweite Teil Y_LSB ein oder mehrere, zusammenhängende niederwertige Bit (Least Significant Bit) enthalten und dass sich der erste und der zweite Teil Y_MSB bzw. Y_LSB weder überschneiden noch dass Lücken zwischen diesen beiden Teilen vorhanden sind.

Ferner ist zwischen der Übertragungseinheit GS und dem ersten Addierer ADD1 der verstellbare Verstärker AGC vorgesehen, dessen Verstärkung aufgrund des Ausgangssignals des ersten Addierers ADD1 verändert wird.

Schliesslich wird das Empfangssignal ES dem Filter AF und dem Kompensationsfilter TLU zugeführt. Aufgrund des Empfangssignals ES werden die Parameter dieser Filter derart eingestellt, dass einerseits eine möglichst genaue Schätzung des Echosignals vorgenommen werden kann und anderseits Nichtidealitäten von verwendeten Signalverarbeitungseinheiten kompensiert werden können.

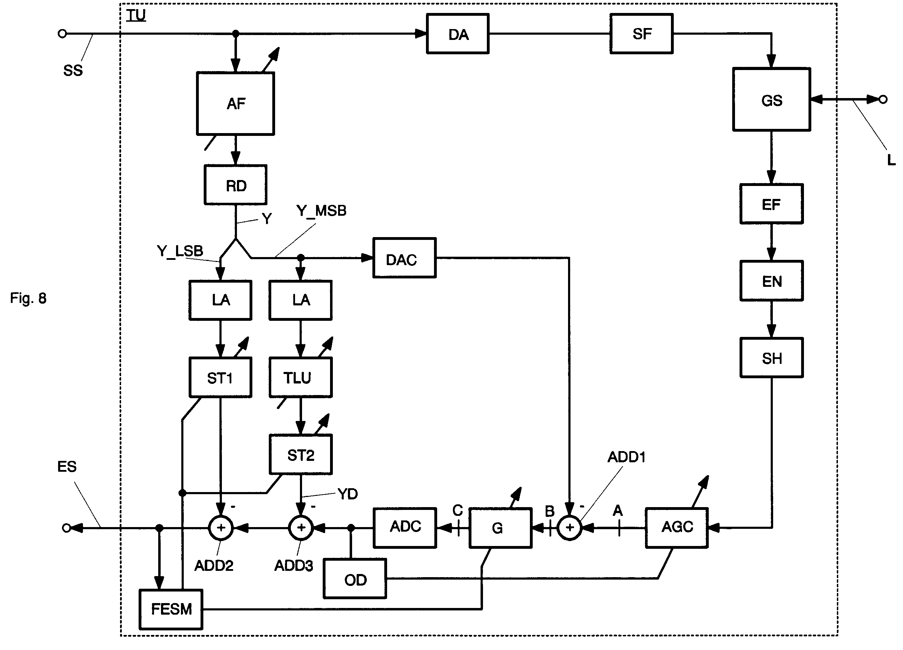

Im folgenden wird die beschriebene Schaltungsanordnung zusammen mit ihrer Funktionsweise weiter erläutert: Wie bereits erwähnt, kann das adaptive Filter AF ein bekanntes FIR-(Finite Impulse Response)-Filter sein, in dem entsprechend der vorhandenen Anzahl Koeffizienten Multiplikationen und Additionen ausgeführt werden. Der Schaltungsaufwand solcher FIR-Filter ist jedoch relativ gross, weshalb die Verwendung eines IIR-(Infinite Impulse Response)-Filters in Kombination mit einem FIR- Filter vorgeschlagen wurde (beispielsweise in EP-0 384 490). Gemäss dieser bekannten Lehre kann der Schaltungsaufwand für das adaptive Filter AF wesentlich reduziert werden. Eine solche Kaskade ist jedoch problematisch bezüglich ihres Adaptionsverhaltens. Besser geeignet sind orthogonale Filterstrukturen, wie das in Fig. 8 präsentierte adaptive Filter AF.

Wie erwähnt, wird das geschätzte Echosignal Y erfindungsgemäss in den ersten Teil Y_MSB und den zweiten Teil Y_LSB aufgeteilt. Der erste Teil Y_MSB des geschätzten Echosignals Y wird zur analogen Vorkompensation dem ersten Digital/Analog-Wandler DAC zugeführt, d.h. der grösste Echoanteil wird über den ersten Addierer ADD1 vor dem Analog/Digital-Wandler ADC kompensiert. Dadurch wird die Dynamik des Analog/Digital-Wandlers ADC und somit auch der für diesen notwendigen Schaltungsaufwand wesentlich reduziert. Um den vollen Eingangsbereich bzw. Dynamikbereich des Analog/Digital-Wandlers ADC abdecken zu können, wird zudem mit Hilfe des einstellbaren Verstärkers AGC das Ausgangssignal des ersten Addierers ADD1 verstärkt bzw. abgeschwächt.

Der zweite Teil Y_LSB des geschätzten Echosignals Y wird in üblicher Weise mit Hilfe des zweiten Addierers ADD2 im digitalen Teil des Empfangspfades kompensiert, d.h. es findet eine eigentliche Feinkompensation des Echosignals beim zweiten Addierer ADD2 statt.

Ist für die analoge Vorkompensation beispielsweise eine Breite von 6 Bit für den ersten Teil Y_MSB des geschätzten Echosignals Y vorgesehen, so wird auch ein erster Digital/Analog-Wandler DAC von 6 Bit benötigt. Wie bereits im Zusammenhang mit der in der Patentanmeldung EP-0 464 500 beschriebenen Lehre erwähnt, ist zur Kompensation der Echosignale mit 14 Bit Genauigkeit, auch ein Digital/Analog-Wandler DAC mit dieser Genauigkeit erforderlich. Das heisst, die Linearität des Digital/Analog-Wandlers DAC muss 14 Bit betragen, obwohl die Auflösung lediglich 6 Bit beträgt. Um mit einer Linearität von 6 Bit auszukommen, verwendet die erfindungsgemässe Schaltungsanordnung gemäss Fig. 3 ein nichtlineares Kompensationsfilter TLU. Damit kann der hohe Schaltungsaufwand eines genauen ersten Digital/Analog-Wandlers DAC vermieden werden.

Das Kompensationsfilter TLU speichert für jede der $2^6$-Stufen des ersten Digital/Analog-Wandlers DAC einen entsprechenden Wert des Kompensationssignals YD, der auf der digitalen Seite dem Addierer ADD3 zugeführt wird. Damit lassen sich allfällige Nichtidealitäten (z.B. Nichtlinearitäten und Verstärkungsfehler) des gesamten analogen Echokompensationspfades - bestehend aus dem Digital/Analog-Wandler DAC, dem ersten Addierer ADD1 und dem Analog/Digital-Wandler ADC - kompensieren.

Bei einer Rechengenauigkeit von 16 Bit für das geschätzte Echosignal Y wird beim ersten Digital/Analog-Wandler DAC mit typischerweise 6 Bit Linearität eine Breite von 10 Bit für das Kompensationssignal YD benötigt. Damit resultiert eine Speichergrösse von $10 * 2^6 = 640$ Bit für das Kompensationsfilter TLU. Für die adaptive Bildung der Kompensationswerte sei auf den Aufsatz von N. Holte und S. Stueflotten mit dem Titel "A new digital echo canceler for two-wire subscriber lines" (IEEE Trans. on Communications, 29(11), Seiten 1573 bis 1581, November 1981) verwiesen.

Besonders vorteilhaft erweist sich nun die Möglichkeit, Digital/Analog-Wandler einzusetzen, die eine kleine Auflösung und allenfalls grosse Nichtlinearitäten aufweisen, da sich entstehende Quantisierungsfehler und Verzerrungen aufgrund der Nichtlinearitäten mit Hilfe des Kompensationsfilters TLU eliminieren lassen.

In einer weiteren Ausführungsform der Erfindung wird ein Kompensationsfilter TLU verwendet, mit dem sich auch dynamische Nichtlinearitäten des ersten Digital/Analog-Wandlers DAC eliminieren lassen. Unter dem Begriff "dynamische Nichtlinearitäten" wird im folgenden eine Abhängigkeit eines Ausgangswertes des Digital/Analog-Wandlers DAC von mehreren Eingangswerten verstanden. Mathematisch lässt sich dies etwa wie folgt ausdrücken:

$$v_j = f(u_{j-1},...,u_{j-i},...,u_{j-n}) \text{ für i=1 bis n}$$

wobei $v_j$ das Ausgangssignal des Digital/Analog-Wandlers DAC zum Zeitpunkt j, $u_{j-1}$, ..., $u_{j-n}$ die letzten n Eingangssignale des Digital/Analog-Wandlers DAC und f(..) die nichtlineare Übertragungsfunktion des Digital/Analog-Wandlers DAC darstellen.

Im folgenden sollen die Auswirkungen von dynamischen Nichtlinearitäten anhand eines einfachen Beispiels erläutert werden: Das Eingangssignal des Digital/Analog-Wandlers DAC wechsle von einem Wert 10 auf den Wert 20. Der sich nach diesem Übergang am Ausgang des Digital/Analog-Wandlers DAC bildende Wert unterscheidet sich von demjenigen, der sich nach einem Übergang vom Eingangswert 15 auf den Wert 20 bildet. Obwohl jeweils der zweite Eingangswert in beiden Fällen gleich gross ist - nämlich 20 -, stellt sich am Ausgang des Digital/Analog-Wandlers DAC nicht der gleiche Wert ein. Die Ursache dieses Unterschiedes in den Ausgangssignalen des Digital/Analog-Wandlers DAC liegt im Vorhandensein einer dynamischen Nichtlinearität, die erfindungsgemäss dadurch korrigiert wird, dass sowohl der momentan am Eingang des Digital/Analog-Wandlers DAC anstehende Wert als auch der diesem vorangehende Wert bei der Erzeugung des Ausgangssignal des Digital/Analog-Wandlers DAC berücksichtigt werden. Entsprechend der oben angeführten allgemeinen mathematischen Formel können beliebig viele vorangegangene Eingangssignalwerte des Digital/Analog-Wandlers DAC bei der Bildung von dessen Ausgangssignal berücksichtigt werden. Mit steigender Anzahl von berücksichtigten vorangegangenen Eingangssignalwerten verkleinert sich der aus der dynamischen Nichtlinearität resultierende Fehler. Allerdings steigt mit zunehmender Berücksichtigung von Eingangssignalwerten der Speicherplatzbedarf im Kompensationsfilter TLU exponentiell an. Dies ist insbesondere bei einer Integration der gesamten Schaltung des Übertragungsnetzwerkes TU auf einem Chip unerwünscht. Es hat sich jedoch gezeigt, dass die Berücksichtigung des momentanen und des unmittelbar vorangegangenen Eingangssignalwertes zur weitgehenden Kompensation von durch dynamische Nichtlinearitäten erzeugten Fehlern ausreichend ist. Darüber hinaus hat sich herausgestellt, dass nicht die ganze Wortbreite des unmittelbar vorangegangenen Eingangssignalwertes zur Fehlerkompensation notwendigerweise verwendet werden muss, womit sich der benötigte Speicherplatzbedarf im Kompensationsfilter TLU reduzieren lässt.

Wird davon ausgegangen, dass die Wortbreite des ersten Teils Y_MSB des geschätzten Echosignals fünf Bit beträgt, so besteht der Adressbereich für den Speicher im Kompensationsfilter TLU beispielsweise aus sieben Bit, nämlich aus fünf Bit des momentanen und aus zwei Bit des vorangegangenen Eingangssignalwertes des Digital/Analog-Wandlers DAC. Bei der Wahl der zwei Bit des vorangegangenen Eingangssignalwertes bestehen bei deren Bestimmung grundsätzlich zwei Möglichkeiten: Entweder werden die zwei höchstwertigen Bit des vorangegangenen Eingangssignalwertes direkt oder es werden die zwei höchstwertigen Bit der berechneten Differenz zwischen vorangegangenem und momentanem Eingangssignalwert, d.h. $u_{j-2} - u_{j-1}$, verwendet.

Bei dem im vorstehend genannten Beispiel verwendeten Adressbereich von sieben Bit ergibt sich für die Korrektur von dynamischen Nichtlinearitäten ein Speicherbedarf von $2^7 = 128$ Speicherplätzen. Der Mehraufwand für den Speicher ist gegenüber dem bei der Korrektur von statischen Nichtlinearitäten benötigten Speicher von $2^5 = 32$ Speicherplätzen gering. Die Vorteile für den analogen Teil des Übertragungsnetzwerkes TU sind jedoch unter Verwendung der vorstehend beschriebenen Korrektur von dynamischen Nichtlinearitäten beträchtlich: vom dynamischen Standpunkt aus betrachtet ist anstelle eines 13-Bit-Digital/Analog-Wandlers DAC lediglich ein 8-Bit-Digital/Analog-Wandler DAC notwendig. Damit kann der Schaltungsaufwand wesentlich vermindert werden, denn insbesondere bei der Integration von analogen Schaltungen mit hohen Anforderungen bezüglich dynamischer Genauigkeit steigt der Schaltungsaufwand erheblich.

In einer weiteren Ausführungsform der Erfindung setzt sich - insbesondere bei der Realisierung des Übertragungsnetzwerkes TU auf einem Chip als sogenannte integrierte Schaltung - der Adressbereich für den Speicher des Kompensationsfilters TLU aus dem ersten Teil Y_MSB des geschätzten Echosignals Y gemäss den vorstehend genannten Möglichkeiten und zusätzlich aus Werten des Sendesignals SS zusammen, von denen - wie schon beim ersten Teil Y_MSB - sowohl ein momentan anstehender Wert $s_{j-1}$ des Sendesignals SS als auch dessen vorangehende Werte $s_{j-2}$ bis $s_{j-m}$ zur Adressierung verwendet werden können, wobei m der Anzahl der berücksichtigten Werte entspricht. Dabei ist vorgesehen, dass Werte $s_{j-1}$ bis $s_{j-m}$ des Sendesignals SS direkt oder dass deren Differenzen - beispielsweise $s_{j-2} - s_{j-1}$ - zur Adressierung des Speichers im Kompensationsfilter TLU verwendet werden. Grund für diese Adressbereichserweiterung ist eine leistungsmässig gegenseitige Abhängigkeit der Ausgangssignale der beiden Digital/Analog-Wandler DA und DAC, denn indem diese auf dem gleichen Substrat angeordnet sind, wirkt sich besonders eine relativ grosse Ausgangssignalveränderung des zweiten Digital/Analog-Wandlers DA auf das Ausgangssignal des ersten Digital/Analog-Wandlers DAC aus, obwohl ansonsten der erste Teil Y_MSB des geschätzten Echosignals Y und das Sendesignal SS im Zeitpunkt j unkorreliert sind.

Durch die vorstehend erläuterte Adressbereichserweiterung nimmt auch die Grösse des Speichers im Kompensationsfilter TLU entsprechend zu. Diese grundsätzlich unerwünschte Entwicklung kann beispielsweise dadurch vermieden werden, dass von den ursprünglich vorgesehenen sechs Bit des ersten Teils Y_MSB des geschätzten Echosignals Y lediglich ein Teil, beispielsweise die vier höchstwertigen Bit, bei der Adressierung verwendet werden.

Die in den vorstehenden Ausführungen angegebenen Wortbreiten für die Eingangssignale können selbstverständlich unterschiedlicher Grösse sein, ohne dass das Wesen der Erfindung geändert wird.

In den Fig. 4 bis 7 sind weitere Ausführungsbeispiele für das Übertragungsnetzwerk TU angegeben, wobei sich diese nur unwesentlich von der in Fig. 3 dargestellten Schaltungsanordnung unterscheiden:

Fig. 4 zeigt die selbe Schaltungsanordnung wie Fig. 3 mit dem Unterschied, dass die Koeffizienten des adaptiven Filters AF aufgrund des Ausgangssignals des dritten Addierers ADD3 - anstelle des zweiten Addierers ADD2 - adaptiert wird. Die Koeffizienten des Kompensationsfilters TLU werden - wie in der in Fig. 3 dargestellten Lösung - aufgrund des Empfangssignal ES eingestellt.

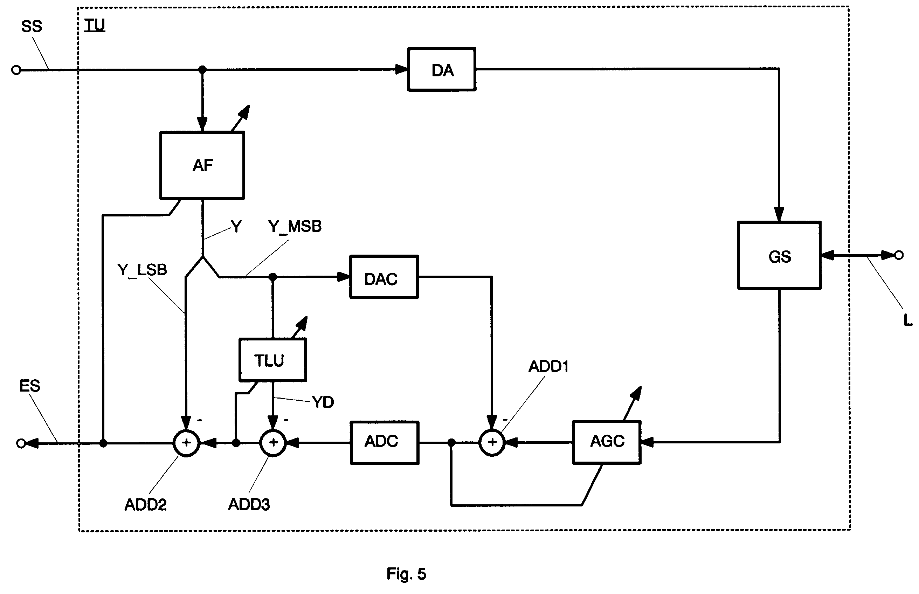

Fig. 5 zeigt ebenso die selbe Schaltungsanordnung wie Fig. 3, allerdings werden die Koeffizienten des Kompensationsfilters TLU aufgrund des Ausgangssignals des dritten Addierers ADD3 - anstelle des zweiten Addierers ADD2 - adaptiert. Die Koeffizienten des adaptiven Filters AF werden - wie auch in der in Fig. 3 dargestellen Schaltungsanordnung - aufgrund des Empfangssignals ES adaptiert.

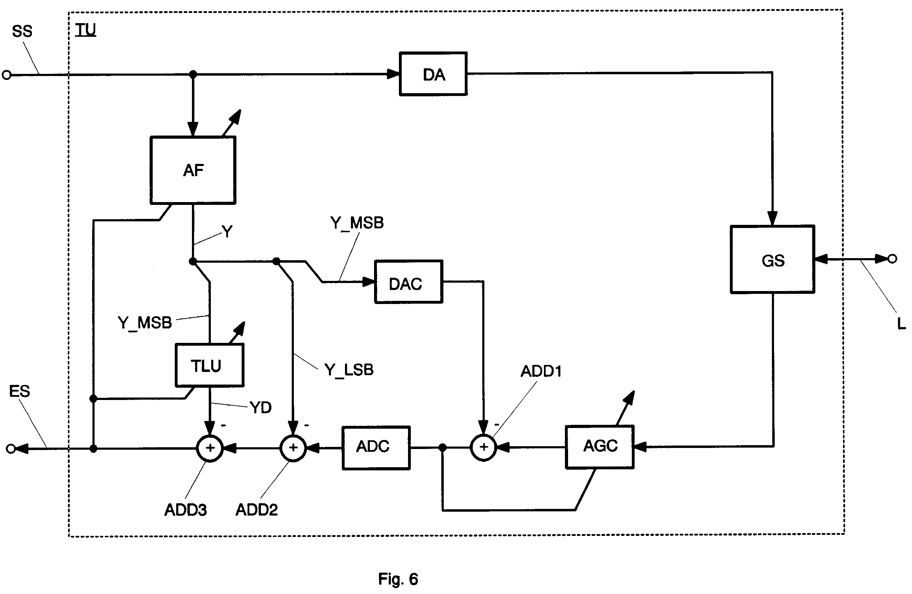

Fig. 6 zeigt ferner eine Schaltungsanordnung, bei der sowohl die Koeffizienten des adaptiven Filters AF als auch diejenigen des Kompensationsfilters TLU aufgrund des Empfangssignals ES adaptiert werden. Unterschiedlich ist allerdings die Reihenfolge der Addierer ADD2 und ADD3 im Empfangspfad. Dem Analog/Digital-Wandler ADC folgt der zweite Addierer ADD2, über den die Feinkompensation des Echosignals Y vorgenommen wird. Dem Addierer ADD2 folgt in Übertragungsrichtung gesehen der dritte Addierer ADD3, dessen zweiter Eingang mit dem Ausgang des Kompensationsfilters TLU verbunden ist. Auch die übrige Struktur der in Fig. 6 dargestellten Schaltungsanordnung wie auch dessen Adaptionsalgorithmen unterscheiden sich gegenüber den anhand Fig. 3 erläuterten nur unwesentlich.

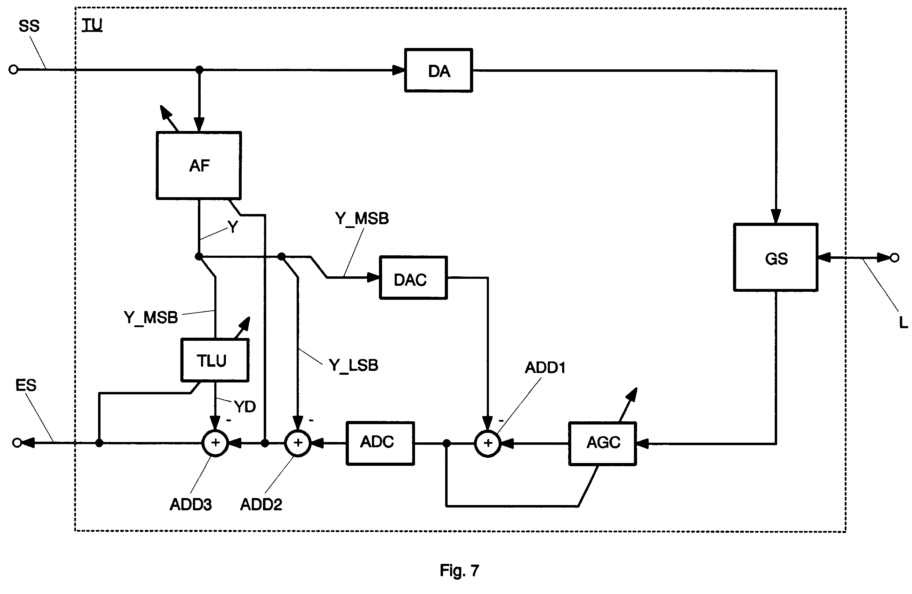

Fig. 7 zeigt schliesslich die selbe Schaltungsanordnung wie Fig. 6, allerdings werden die Koeffizienten des adaptiven Filters AF aufgrund des Ausgangssignals des zweiten Addierers ADD2 - anstelle des dritten Addierers ADD3 bzw. des Empfangssignals ES - adaptiert. Die Koeffizienten des Kompensationsfilters TLU werden - wie auch in der in Fig. 6 dargestellen Schaltungsanordnung - aufgrund des Empfangssignals ES adaptiert.

Um das Einschwingen des adaptiven Filters AF und des Kompensationsfilters TLU zu ermöglichen und um zu gewährleisten, dass das adaptive Filter AF im eingeschwungenen Zustand optimal eingestellt ist, sind folgende Massnahmen notwendig: Der verstellbare Verstärker AGC darf nicht eine beliebige Verstärkung aufweisen, sondern muss innerhalb eines Verstärkung-bereichs liegen, der durch eine minimale und durch eine maximale Verstärkung begrenzt ist und eine bestimmte Referenzgrösse aufweist, die beispielsweise mit der Momentanleistung des Eingangssignals am Analog/Digital-Wandler ADC verglichen werden kann und die derart eingestellt werden muss, dass das Eingangssignal des Analog/Digital-Wandlers ADC nicht durch dessen Eingangsbereich limitiert wird. Ferner muss die minimale Verstärkung derart beschränkt werden, dass die grösste Amplitude des mit dieser minimalen Verstärkung verstärkten Echosignals mindestens um den Faktor zwei grösser ist als der kleinste Spannungswert, der mit dem ersten Digital/Analog-Wandler DAC erzeugt werden kann. Die maximale Verstärkung des verstellbaren Verstärkers AGC muss andererseits derart beschränkt werden, dass die maximale Amplitude des mit der maximalen Verstärkung verstärkten Echosignals im Empfangspfad kleiner ist, als die maximale analoge Spannung, die der erste Digital/Analog-Wandler DAC erzeugen kann.

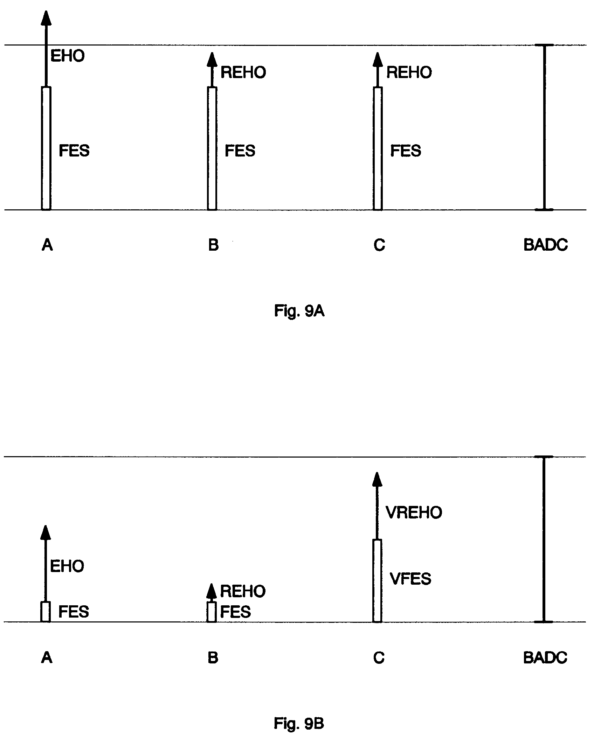

In Fig. 8 ist eine weitere Ausführungsform eines Übertragungsnetzwerkes TU dargestellt, das sich insbesondere durch eine automatische Anpassung an unterschiedliche Leitungslängen der an der Übertragungseinheit GS angeschlossenen Zweidrahtleitungen L auszeichnet. Dazu ist eine Empfangssignalmesseinheit FESM, eine Verstärkungseinheit G und eine Bitschiebeeinheit ST1 vorgesehen, wobei die Empfangssignalmesseinheit FESM den Signalbereich des Empfangssignals SS überwacht, damit aufgrund der gewonnen Informationen sowohl die Verstärkungseinheit G als auch die Bitschiebeeinheit ST1 derart gesteuert werden können, dass der gesamte Dynamikbereich des Analog/Digital-Wandlers ADC ausgenützt wird. Während die Verstärkungseinheit G vorzugsweise zwischen dem ersten Addierer ADD1 und dem Analog/Digital-Wandler ADC im Empfangspfad vorgesehen ist, befindet sich die Bitschiebeeinheit ST1 im den ersten Teil Y_MSB des geschätzten Echosignals Y führenden Signalpfad (im folgenden als digitaler Kompensationspfad bezeichnet) vorzugsweise vor dem zweiten Addierer ADD2. Die Funktionsweise ist nachstehend anhand Fig. 9 im Detail erläutert. Im digitalen Kompensationspfad befindet sich vor der Bitschiebeeinheit ST1 - in Signalübertragungsrichtung gesehen - eine Laufzeitanpassungseinheit LA, über die unterschiedliche Signallaufzeiten zwischen dem analogen und dem digitalen Kompensationspfad ausgeglichen werden. Unterschiedliche Laufzeiten entstehen vor allem durch Signalverzögerungen beim analogen ersten Addierer ADD1 und beim Analog/Digital-Wandler ADC. Demzufolge ist in entsprechender Weise auch im weiteren digitalen Kompensationspfad bestehend aus dem Kompensationsfilter TLU und dem dritten Addierer ADD3 eine Laufzeitanpassungseinheit LA vorgesehen, die vorzugsweise - in Signalübertragungsrichtung gesehen - vor dem Kompensationsfilter TLU enthalten ist und auch in diesem Signalpfad unterschiedliche Signallaufzeiten zwischen dem analogen und dem digitalen Kompensationspfad ausgleicht.

In der in Fig. 8 dargestellten Ausführungsform der Erfindung ist im weiteren digitalen Kompensationspfad, in dem das Kompensationsfilter TLU enthalten ist, eine weitere Bitschiebeeinheit ST2 vorgesehen, die wie die Bitschiebeeinheit ST1 von der Empfangssignalmesseinheit FESM in noch zu erläuternder Weise gesteuert wird. Durch diese weitere optionale Bitschiebeeinheit ST2 wird der Einschwingvorgang des Gesamtsystems wesentlich verkürzt.

Bezüglich den in den Fig. 3 bis 7 dargestellten Übertragungsnetzwerken TU unterscheidet sich dasjenige in Fig. 8 dargestellte dadurch, dass zusätzlich eine Rundungseinheit RD, ein Sendefilter SF, ein Empfangsfilter EF, ein Vorentzerrer EN, ein Halteglied SH und ein Detektor OD vorgesehen sind, wobei die Rundungseinheit RD zwischen dem adaptiven Filter AF und der Signalverzweigung des geschätzten Echosignals Y und das Sendefilter SF zwischen dem Digital/Analog-Wandler DA und der Übertragungseinheit GS enthalten sind. Ferner sind das Empfangsfilter EF, der Vorentzerrer EN und das Halteglied SH in Serie zwischen der Übertragungseinheit GS und dem verstellbaren Verstärker AGC geschaltet. Schliesslich ist der Detektor OD zur Überwachung des Aussteuerbereiches des Analog/Digital-Wandlers ADC vorgesehen, damit der verstellbare Verstärker AGC zur optimalen Ausnützung des Eingangsbereiches des Analog/Digital-Wandlers ADC eingestellt werden kann.

Die Rundungseinheit RD wird zur Reduktion der Signalbreite des mit Hilfe des adaptiven Filters AF geschätzten Echosignals zur Verminderung des Schaltungsaufwandes verwendet, wobei bei einer Auflösung von 24 Bit für das Ausgangssignal des adaptiven Filters AF vorzugsweise nur die 10 höchstwertigen Bit weiterverarbeitet werden, da der Verarbeitungsaufwand für alle 24 Bit einerseits grösser ist, andererseits aber zu keinen wesentlichen Verbesserungen bei der Echokompensation führen. Aus diesem Grund wird das Ausgangssignal des adaptiven Filters AF mit Hilfe der Rundungseinheit RD auf die 13 höchstwertigen Bit mittels Rundung reduziert. Die verbleibenden 13 Bit für das geschätzte Echosignal Y wird in den ersten Teil Y_LSB mit 8 Bit und in den zweiten Teil Y_MSB mit 5 Bit aufgeteilt.

Wie erwähnt ist im Sendepfad nach dem Digital/Analog-Wandler DA das Sendefilter SF vorgesehen, das zur Aufbereitung des zu sendenden Signals verwendet wird, wie es etwa in der schweizerischen Patentanmeldung mit der Anmeldenummer 2298/94-8 beschrieben wurde. Im Empfangspfad wird in entsprechender Weise mit Hilfe des Empfangsfilters EF, des Vorentzerrers EN und des Halteglieds SH das empfangene Signal zur Weiterverarbeitung - insbesondere zur folgenden Analog/Digital-Wandlung - aufbereitet.

Das Sendefilter SF, das Empfangsfilter EF, der Entzerrer EN, das Halteglied SH und die Rundungseinheit RD können einzeln oder in Kombination miteinander selbstverständlich auch in einem der in den Fig. 3 bis 7 dargestellten Übertragungsnetzwerken TU eingesetzt werden. Entsprechend können zur Generierung der beim adaptiven Filter AF und beim Kompensationsfilter TLU zur Adaption benötigten Referenzsignale auch Signale an den in den Fig. 3 bis 7 dargestellten Stellen der Schaltungsanordnung abgegriffen werden.

Fig. 9A und 9B zeigen Amplitudenverhältnisse von Signalanteilen an Referenzpunkten A, B und C (Fig. 8) im Empfangspfad des Übertragungsnetzwerkes TU, wobei der Referenzpunkt A vor dem analogen ersten Addierer ADD1, der Referenzpunkt B vor der Verstärkungseinheit G und der Referenzpunkt C vor dem Analog/Digital-Wandler ADC liegt. Der Einfachheit halber wird davon ausgegangen, dass kein verstellbarer Verstärker AGC vorgesehen bzw. dass dessen Verstärkungsfaktor gleich eins ist. Wie erwähnt, überwacht die Empfangssignalmesseinheit FESM das Empfangssignal ES (Fig. 8) und prüft, ob der Eingangsbereich des Analog/Digital-Wandlers ADC voll ausgenützt ist oder ob allenfalls durch Änderung des Verstärkungsfaktors in der Verstärkungseinheit G bzw. ob eine Bitverschiebung in den Bitschiebeeinheiten ST1 und ST2 - was ebenfalls eine Signalverstärkung bzw. -abschwächung bewirkt - vorgenommen werden soll. Dabei ist jedoch darauf zu achten, dass die zwei bzw. drei Verstärkungsfaktoren gleich gross sind. Dies wird dadurch erreicht, dass bei einer Bitverschiebung von n Stellen in den Bitschiebeeinheiten ST1 und ST2, der Verstärkungsfaktor in der Verstärkungseinheit G $2^n$ beträgt. Damit bleibt die Signalintegrität im Übertragungsnetzwerk TU, insbesondere zwischen dem analogen und dem digitalen Kompensationspfad, erhalten. Als wesentlicher Vorteil resultiert daraus eine automatische Anpassung des Übertragungsnetzwerkes TU an unterschiedliche Leitungslängen der Zweidrahtleitung L. Dies soll anhand der Fig. 9A und 9B weiter erläutert werden, wobei in Fig. 9A von einer kurzen Zweidrahtleitung L mit einem entsprechend grossen Nutzsignal FES und in Fig. 9B von einer langen Zweidrahtleitung L mit einem entsprechend kleinen Nutzsignal FES ausgegangen wird. In beiden dargestellten Fällen ist der Echosignalanteil EHO gleich gross, wobei das Nutzsignal FES entsprechend der Leitungslänge mehr oder weniger abgeschwächt ist.

Fig. 9A zeigt die maximale Amplitude des mit dem Echosignalanteil EHO überlagerten Nutzsignal FES in den Referenzpunkten A, B und C in Bezug zum Eingangsbereich BADC des Analog/Digital-Wandlers ADC (Fig. 8). Im Referenzpunkt A kann ein aus dem Nutzsignal FES und dem Echosignalanteil EHO bestehendes Gesamtsignal grösser sein als der Eingangsbereich BADC. Es ist jedoch unabdingbar, dass nach der analogen Vorkompensation im ersten Addierer ADD1 das Gesamtsignal im Referenzpunkt B kleiner als der Eingangsbereich BADC ist, damit der Analog/Digital-Wandler ADC nicht übersteuert wird. Das Gesamtsignal im Referenzpunkt B setzt sich somit aus dem ursprünglichen Nutzsignal FES und dem Restechosignalanteil REHO zusammen. In der in Fig. 9A dargestellten Situation ist der Verstärkungsfaktor der Verstärkungseinheit G gleich eins, weshalb auch im Referenzpunkt C das gleiche Gesamtsignal vorhanden ist.

An dieser Stelle sei angemerkt, dass das Gesamtsignal im Referenzpunkt A immer so gross sein soll, dass das Gesamtsignal im Referenzpunkt B, d.h. nach der analogen Vorkompensation, gerade noch kleiner als der Eingangsbereich BADC ist. Sollte dies nicht der Fall sein, so kann diese Situation auch durch Änderung des Verstärkungsfaktors des verstellbaren Verstärkers AGC herbeigeführt werden.

In Fig. 9B wird - im Unterschied zur in Fig. 9A dargestellten Situation - von einer langen Leitungslänge für die Zweidrahtleitung L ausgegangen. Demzufolge ist das Nutzsignal FES entsprechend kleiner. Gegenüber der in Fig. 9A dargestellten Situation ist der Echosignalanteil EHO als gleich gross angenommen, womit auch das Gesamtsignal entsprechend kleiner ist. Im Referenzpunkt B liegt dem Gesamtsignal lediglich das ursprüngliche Nutzsignal FES und der Restechosignalanteil REHO zugrunde. Um den ganzen Eingangsbereich BADC des Analog/Digital-Wandlers ADC ausnützen zu können, wird das im Referenzpunkt B vorhandene Gesamtsignal in der Verstärkungseinheit G derart verstärkt, dass wiederum der ganze Eingangsbereich BADC ausgenützt wird. Dabei ist jedoch auch das im digitalen Kompensationspfad bereitgestellte Kompensationssignal entsprechend zu verstärken. Dies wird wie erwähnt durch Bitverschiebungen in der Bitschiebeeinheit ST1 und - falls vorhanden - auch in der Bitschiebeeinheit ST2 vorgenommen.

Im Referenzpunkt C ist demzufolge ein Gesamtsignal vorhanden, das sich aus einem verstärkten Restechosignalanteil VREHO und einem verstärkten Nutzsignal VFES zusammensetzt.

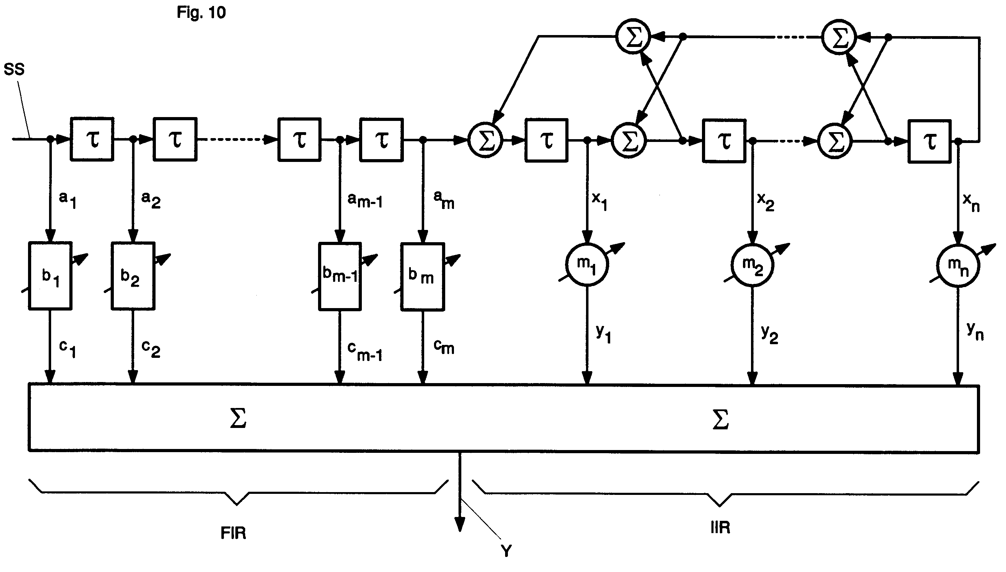

Wie erwähnt, kann eine der bekannten Filterstrukturen (FIR-Filter oder FIR- in Kombination mit einem IIR-Filter) für das adaptive Filter AF (Fig. 1 bis 8) verwendet werden. Besonders vorteilhaft für die Adaption erweisen sich jedoch die in Fig. 10 dargestellte Filterstruktur für das adaptive Filter AF.

Das in Fig. 10 dargestellte adaptive Filter AF weist neben einem FIR-Filterteil einen IIR-Filterteil auf, der vorzugsweise in der "Inversen Lattice"-Struktur realisiert wird. Wesentlich dabei ist, dass nicht nur die FIR-Filterzustände $a_1$ bis $a_m$, sondern auch die IIR- Filterzustände $x_1$ bis $x_n$ unkorreliert sind.

Der FIR-Filterteil besteht aus in Serie geschalteten Verzögerungsgliedern $\tau$, aus Koeffizientenelementen $b_1$ bis $b_m$ und einem Addierer $\Sigma$. Das Eingangssignal des adaptiven Filters AF und somit auch des FIR-Filterteils ist das Sendesignal $\Sigma\Sigma$, das einerseits der in Serie geschalteten Verzögerungsglieder $\tau$ und anderseits dem ersten Koeffizientenelement $b_1$ zugeführt wird. In gleicher Weise sind die weiteren Koeffizientenelemente $b_2$ bis $b_m$ angeordnet, wobei deren Eingangssignale zwischen sich folgenden Verzögerungsgliedern $\tau$ abgegriffen und deren Ausgangssignale im Addierer $\Sigma$ zusammengefasst werden. In diesem Addierer $\Sigma$ werden ausserdem auch die Ausgangssignale des IIR-Filterteils zu dem geschätzten Echosignal Y zusammengefasst. Die Pole des IIR-Filters werden aus Stabilitätsgründen während dem Betrieb nicht verändert. Sie werden beispielsweise mit einem im Aufsatz von A. Kaelin et. al. beschriebenen Verfahren ("Linear Echo Cancellation Using Optimized Recursive Prefiltering", Proc. IEEE Int. Symp. on Circuits and Systems, Chicago, Seiten 463 bis 466, 1993) optimal an die gegebene Systemumgebung angepasst.

Der FIR-Filterteil und dessen Adaption ist erfindungsgemäss nach dem Speicherkompensationsverfahren realisiert, um die Korrektur von Abbildungsfehlern des Digital/Analog-Wandlers DA (Fig. 3 bis 8) grösstenteils zu ermöglichen. Dabei dienen jeweils die beiden Bit der vierwertigen Zustände $a_1$ bis $a_m$ zur Adressierung eines Speichers mit vier Speicherzellen. In jeder Zelle werden die Ausgangswerte adaptiv gebildet (N. Holte und S. Stueflotten. "A new digital echo canceler for two-wire subscriber lines.", IEEE Trans. on Communications, 29(11), Seiten 1573 bis 1581, November 1981). Somit werden für ein FIR- Filter mit 20 Taps 20 Speicher mit je vier Speicherzellen benötigt. Der Speicheraufwand beträgt dann für 16 Bit breite Speicherzellen 20 * 4 * 16 = 1280 Bit.

Es sei ausdrücklich darauf hingewiesen, dass eine beliebige Zuordnung des Speichers auf die Zustände $a_1$ bis $a_m$ zulässig ist. Beispielsweise ist auch ein einziger Speicher mit nur einem Adressbereich, der aus sämtlichen Bit der Zustände $a_1$ bis $a_m$ gebildet ist, zulässig. In diesem Fall wird allerdings der Speicherbedarf unrealistisch gross, beispielsweise $4^{20} * 16 = 1.76 * 10^{13}$ Bit für ein FIR-Filter mit 20 Taps.

Wie erwähnt, muss das entsprechend dem 2B1Q-Code vierwertige Sendesignal SS (Fig. 1 bis 8) in ein analoges Signal umgesetzt werden, das zum Beispiel den von ETSI (European Telecommunications Standards Institute) vorgeschlagenen Spezifikationen genügt. Bekannte HDSL-Sender formen dabei dieses Sendesignal bereits auf der digitalen Seite, d.h. vor dem zweiten Digital/Analog-Wandler DA, indem zum Beispiel ein weiteres digitales Filter eingesetzt wird. Ein analoges Filter, das typischerweise 2. bis 5. Ordnung ist, ist zur Glättung der Pulsform zwischen dem Digital/Analog-Wandler DA und der Übertragungseinheit GS (Fig. 1 und 2) jedoch trotzdem notwendig. Von erheblichem Nachteil bei einem derart aufgebauten Sendepfad erweisen sich die Anforderungen an den Digital/Analog-Wandler DA. Dieser muss zunächst eine Wandlungsrate aufweisen, die ein Vielfaches der Symbolrate beträgt. Ferner werden auch an die Auflösung und an die Linearität des Digital/Analog-Wandlers DA erhöhte Anforderungen gestellt, damit das gewünschte analoge Sendesignal möglichst genau erzeugt werden kann.

Zur Verminderung der an den Digital/Analog-Wandler DA gestellten Anforderungen und damit zur weiteren Reduktion des Schaltungsaufwandes ist erfindungsgemäss ein analoges Sendefilter zwischen dem Digital/Analog-Wandler DA und der Übertragungseinheit GS vorgesehen. Dieses Sendefilter setzt die vom Digital/Analog-Wandler DA erzeugten Rechteckpulse der Höhe -3, -1, +1 oder +3 in eine genau gewünschte Pulsform um. Dazu sind die Pole und die Nullstellen der Übertragungsfunktion des Sendefilters mit einem geeigneten Verfahren zu bestimmen. Standardfilter, wie die bekannten Chebyshev- oder Butterworth-Filter, eignen sich als Ausgangslage für das Sendefilter nicht, da die Nullstellen bei diesen im "Unendlichen" fixiert sind. Trotzdem ist der Aufwand für ein mit einem Systemidentifikationsverfahren erhaltenen optimalen Sendefilter praktisch identisch zu einem als Glättungsfilter verwendeten Standardfilter. Dies ist auch aus der folgenden Übertragungsfunktion T(s) ersichtlich, die bezüglich einer Symbolrate von 292 Symbole/s optimiert wurde:

$$T(s) = T_1(s) \cdot T_2(s)$$

wobei

$$T_1(s) = 0.3940 \cdot \frac{s^2 + 1.1834 \cdot 10^6 \cdot s + 2.4134 \cdot 10^{13}}{s^2 + 4.9598 \cdot 10^6 \cdot s + 1.3263 \cdot 10^{13}}$$

$$T_2(s) = \frac{1}{0.3940} \cdot \frac{6.1007 \cdot 10^{12}}{s^2 + 5.2757 \cdot 10^6 \cdot s + 1.1154 \cdot 10^{13}}$$

Wird zur Realisierung dieser Übertragungsfunktion T(s) die SC-(Switched Capacitor)-Technologie verwendet, so muss die Schaltungsanordnung bei Veränderung der Symbolrate nicht verändert werden. Die fehlende Programmierbarkeit, die dieses analoge Filter gegenüber einem digitalen Filter aufweist, schränkt die Anwendbarkeit demzufolge in keiner Weise ein.

Da die Glättung und die Pulsformung erfindungsgemäss durch das gleiche Sendefilter bewerkstelligt werden, genügt ein Digital/Analog-Wandler DA mit lediglich zwei Bit Auflösung und einer Konvertierungsrate, die der Symbolrate entspricht. Die sich aus den zwei Bit ergebenden vier Stufen dürfen dabei sehr ungenau sein, da diese Art von Nichtlinearität durch den FIR-Filterteil des anhand Fig. 10 erläuterten adaptiven Filters AF (Fig. 3 bis 8) korrigiert wird.

Schliesslich ist ausdrücklich darauf hinzuweisen, dass die erfindungsgemässe Schaltungsanordnung nicht allein bei der HDSL Datenübertragung erfolgreich angewendet wird. Vielmehr eignet sich die Schaltungsanordnung auch für andere Übertragungsarten zur Kompensation von Echosignalanteilen.

**Patentansprüche**

1.  Schaltungsanordnung bestehend aus einem ein Sendesignal (SS) führenden Sendepfad, einem ein Empfangssignal (ES) führenden Empfangspfad, einem adaptiven Filter (AF), einem analogen ersten Addierer (ADD1), einem ersten Digital/Analog-Wandler (DAC), einer Übertragungseinheit (GS) und einer an diese angeschlossenen Zweidrahtleitung (L), über die zumindest das Sendesignal (SS), das Empfangssignal (ES) und Echosignalanteile übertragen werden, wobei der Sende- und der Empfangspfad mit der Übertragungseinheit (GS) verbunden sind, das Sendesignal (SS) zur Schätzung des Echosignals dem adaptiven Filter (AF) zugeführt wird und das geschätzte digitale Echosignal (Y) über den ersten Digital/Analog-Wandler (DAC) dem im Empfangspfad enthaltenen analogen ersten Addierer (ADD1) zur Reduktion des Echosignalanteils im Empfangssignals (ES) zugeführt wird, **dadurch gekennzeichnet**, dass dem ersten Addierer (ADD1) in Übertragungsrichtung gesehen ein Analog/Digital-Wandler (ADC) und diesem ein digitaler zweiter Addierer (ADD2) folgt und dass ein erster Teil (Y_MSB) des geschätzten Echosignals (Y) dem ersten Addierer (ADD1) und ein zweiter Teil (Y_LSB) des geschätzten Echosignals (Y) dem zweiten Addierer (ADD2) zur Erzeugung des Empfangssignals (ES) zugeführt wird.

2. Schaltungsanordnung nach Anspruch 1, **dadurch gekennzeichnet**, dass Mittel (ST1, FESM, G; AGC, OD) zur vollen Ausnützung des für den Analog/Digital-Wandler (ADC) vorgesehenen Dynamikbereiches und somit zur automatischen Anpassung an unterschiedliche Längen der Zweidrahtleitung (L) vorgesehen sind.

3. Schaltungsanordnung nach Anspruch 2, **dadurch gekennzeichnet**, dass die Mittel (ST1, FESM, G) zur Anpassung an unterschiedliche Leitungslängen aus einer Bitschiebeeinheit (ST1), einer Verstärkungseinheit (G) und einer Empfangssignalmesseinheit (FESM) bestehen, dass die Bitschiebeeinheit (ST1) in Signalübertragungsrichtung vor dem zweiten Addierer (ADD2) und die Verstärkungseinheit (G) zwischen dem ersten Addierer (ADD1) und dem Analog/Digital-Wandler (ADC) vorgesehen sind und dass die Empfangssignalmesseinheit (FESM) zur Steuerung der Bitschiebeeinheit (ST1) und der Verstärkungseinheit (G) mit dem Empfangssignal (ES) beaufschlagt ist.

4. Schaltungsanordnung nach Anspruch 2 oder 3, **dadurch gekennzeichnet**, dass die Mittel (AGC, OD) zur Anpassung an unterschiedliche Leitungslängen aus einem verstellbaren Verstärker (AGC) und einem Detektor (OD) bestehen, wobei der verstellbare Verstärker (AGC) in Signalübertragungsrichtung gesehen vor dem ersten Addierer (ADD1) vorgesehen ist und der Detektor (OD) mit dem Ausgangssignal des Analog/Digital-Wandlers (ADC) zur Steuerung des verstellbaren Verstärkers (AGC) beaufschlagt ist.

5. Schaltungsanordnung nach einem der vorangehenden Ansprüche, **dadurch gekennzeichnet**, dass ein digitaler dritter Addierer (ADD3) zwischen dem Analog/Digital-Wandler (ADC) und dem zweiten Addierer (ADD2) im Empfangspfad vorgesehen ist, dass Mittel (TLU) zum Kompensieren von Nichtidealitäten des Analog/Digital-Wandlers (ADC), des ersten Addierers (ADD1), des Digital/Analog-Wandlers (DAC) und weiteren zwischen dem ersten Teil (Y_MSB) des geschätzten Echosignals (Y) und dem dritten Addierer (ADD3) liegenden Signalverarbeitungseinheiten (ST2) vorgesehen sind, wobei diese Mittel (TLU) mit dem ersten Teil (Y_MSB) des geschätzten Echosignals (Y) beaufschlagt sind, aufgrund dessen ein Kompensationssignal (YD) erzeugt wird, das über den dritten Addierer (ADD3) vom Signal im Empfangspfad subtrahiert wird.

6. Schaltungsanordnung nach einem der Ansprüche 1 bis 4, **dadurch gekennzeichnet**, dass ein digitaler dritter Addierer (ADD3) dem zweiten Addierer (ADD2) in Signalrichtung gesehen nachgeschaltet ist, dass Mittel (TLU) zum Kompensieren von Nichtidealitäten des Analog/Digital-Wandlers (ADC), des ersten Addierers (ADD1), des Digital/Analog-Wandlers (DAC) und weiteren zwischen dem ersten Teil (Y_MSB) des geschätzten Echosignals (Y) und dem dritten Addierer (ADD3) liegenden Signalverarbeitungseinheiten (ST2) vorgesehen sind, wobei diese Mittel (TLU) mit dem ersten Teil (Y_MSB) des geschätzten Echosignals (Y) beaufschlagt sind, aufgrund dessen ein Kompensationssignal (YD) erzeugt wird, das über den dritten Addierer (ADD3) vom Signal im Empfangspfad subtrahiert wird.

7. Schaltungsanordnung nach einem der Ansprüche 5 oder 6, **dadurch gekennzeichnet**, dass der adaptive Filter (AF) zur Adaption mit dem Empfangssignal (ES) beaufschlagt ist.

8. Schaltungsanordnung nach Anspruch 5, **dadurch gekennzeichnet**, dass der adaptive Filter (AF) zur Adaption mit dem Ausgangssignal des dritten Addierers (ADD3) beaufschlagt ist.

9. Schaltungsanordnung nach Anspruch 6, **dadurch gekennzeichnet**, dass der adaptive Filter (AF) zur Adaption mit dem Ausgangssignal des zweiten Addierers (ADD2) beaufschlagt ist.

10. Schaltungsanordnung nach einem der Ansprüche 5 bis 9, **dadurch gekennzeichnet**, dass die Mittel (TLU) zum Kompensieren von Nichtidealitäten zur Adaption mit dem Empfangssignal (ES) beaufschlagt sind.

**11.** Schaltungsanordnung nach einem der Ansprüche 5, 7 und 8, **dadurch gekennzeichnet**, dass die Mittel (TLU) zum Kompensieren von Nichtidealitäten zur Adaption mit dem Ausgangssignal des dritten Addierers (ADD3) beaufschlagt sind.

**12.** Schaltungsanordnung nach einem der Ansprüche 5 bis 11, **dadurch gekennzeichnet**, dass die Mittel (TLU) zum Kompensieren von Nichtidealitäten aus einem adaptiven Filter vom Speicherkompensationstyp bestehen.

**13.** Schaltungsanordnung nach einem der vorangehenden Ansprüche, **dadurch gekennzeichnet**, dass das adaptive Filter (AF) aus einem FIR-Filterteil (FIR) und/oder einem IIR-Filterteil (IIR) besteht, wobei der FIR-Filterteil (FIR) vom Speicherkompensationstyp ist.

**14.** Schaltungsanordnung nach Anspruch 13, **dadurch gekennzeichnet**, dass im Sendepfad ein zweiter Digital/Analog-Wandler (DA) und ein Sendefilter (SF) vorgesehen ist, wobei das Sendefilter (SF) eingangsseitig mit dem Digital/Analog-Wandler (DA) und ausgangsseitig mit der Übertragungseinheit (GS) verbunden ist, und dass der Digital/Analog-Wandler (DA) mit dem Sendesignal (SS) beaufschlagt ist.

**15.** Schaltungsanordnung nach Anspruch 14, **dadurch gekennzeichnet**, dass das Sendesignal (SS) vierwertig ist und dass der Digital/Analog-Wandler (DA) zwei Bit aufweist, wobei der FIR-Filterteil (FIR) derart adaptiv eingestellt wird, dass Nichtidealitäten, insbesondere Nichtlinearitäten, des Digital/Analog-Wandlers (DA) korrigiert werden.

**16.** Schaltungsanordnung nach einem der Ansprüche 14 oder 15, **dadurch gekennzeichnet**, dass das Sendefilter (SF) derart ausgebildet ist, dass an dessen Ausgang eine vorgegebene Pulsform erzeugt wird.

**17.** Schaltungsanordnung nach Anspruch 16, **dadurch gekennzeichnet**, dass das Sendefilter (SF) eine Übertragungsfunktion

$$T(s) = T_1(s) \cdot T_2(s)$$

aufweist, wobei

$$T_1(s) = 0.3940 \cdot \frac{s^2 + 1.1834 \cdot 10^6 \cdot s + 2.4134 \cdot 10^{13}}{s^2 + 4.9598 \cdot 10^6 \cdot s + 1.3263 \cdot 10^{13}}$$

und

$$T_2(s) = \frac{1}{0.3940} \cdot \frac{6.1007 \cdot 10^{12}}{s^2 + 5.2757 \cdot 10^6 \cdot s + 1.1154 \cdot 10^{13}}$$

ist.

**18.** Schaltungsanordnung nach einem der Ansprüche 13 bis 17, **dadurch gekennzeichnet**, dass für den IIR-Filterteil (IIR) charakteristische Polstellen entsprechend der Übertragungscharakteristik der Zweidrahtleitung (L) fixiert sind.

Fig. 1

Fig. 2

Fig. 3

Fig. 4

SS

TU

DA

AF

Y

Y_MSB

Y_LSB

DAC

GS

TLU

YD

ADD1

ES

ADC

AGC

ADD2

ADD3

EP 0 691 756 A1

Fig. 5

EP 0 691 756 A1

Fig. 6

Fig. 7

EP 0 691 756 A1

Fig. 8

EP 0 691 756 A1

18

Fig. 9A

Fig. 9B

Fig. 10

EP 0 691 756 A1

EP 0 691 756 A1

Europäisches
Patentamt

**EUROPÄISCHER RECHERCHENBERICHT**

Nummer der Anmeldung
EP 95 11 0440

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE-A-41 38 567 (OY NOKIA AB) 4.Juni 1992 * Spalte 1, Zeile 50 - Spalte 2, Zeile 12 * * Spalte 3, Zeile 40 - Spalte 4, Zeile 51; Abbildung 3 * --- | 1,5-12 | H04B3/23 |
| A | US-A-4 600 815 (HORNA) 15.Juli 1986 * Spalte 1, Zeile 67 - Spalte 2, Zeile 31 * --- | 2-4 | |
| A | FR-A-2 517 906 (CENTRE NATIONAL DE LA RECHERCHE SCIENTIFIQUE) 10.Juni 1983 * Seite 10, Zeile 5 - Seite 12, Zeile 15; Abbildungen 4,5 * --- | 2-4 | |
| D,A | EP-A-0 384 490 (NEC CORP.) 29.August 1990 * Seite 2, Zeile 17 - Zeile 36 * ----- | 13 | |

RECHERCHIERTE SACHGEBIETE (Int.Cl.6)

H04B
H04M

Der vorliegende Recherchenbericht wurde für alle Patentansprüche erstellt

| Recherchenort | Abschlußdatum der Recherche | Prüfer |
|---|---|---|
| DEN HAAG | 1.September 1995 | Bossen, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

21